# EUROPÄISCHE PATENTSCHRIFT

(11) **EP 3 034 873 B1**
(45) Veröffentlichungstag und Bekanntmachung des Hinweises auf die Patenterteilung: **13.09.2017**
(21) Anmeldenummer: 15196942.5
(22) Anmeldetag: 30.11.2015
(51) Int. Cl.: F04B 1/24

(54) **HYDROSTATISCHES GETRIEBE**
HYDROSTATIC TRANSMISSION
TRANSMISSION HYDROSTATIQUE

(30) Priorität: 16.12.2014 DE 102014225950
(43) Veröffentlichungstag der Anmeldung: 22.06.2016
(73) Patentinhaber: ROBERT BOSCH GMBH, 70442 Stuttgart (DE)
(72) Erfinder: Hendrix, Gottfried, 97737 Gemuenden (DE); Keller, Roland, 97241 Bergtheim (DE)
(74) Vertreter: Thürer, Andreas

(56) Entgegenhaltungen:
- WO-A2-2012/031584
- DE-A1-102009 048 807
- DE-A1-102010 045 541
- US-B1- 6 176 086

## Beschreibung

Die Erfindung betrifft ein Hydrostatisches Getriebe gemäß dem Oberbegriff des Patentanspruchs 1.

Bekannte hydrostatische Getriebe sind üblicherweise durch eine fluidische Verbindung von zwei herkömmlichen Hydromaschinen ausgebildet, die eine davon auf einer Antriebsseite und die andere davon auf einer Abtriebsseite. Dabei sind die Hydromaschinen jeweils mit ihrer Hochdruckseite und ihrer Niederdruckseite fluidisch miteinander verbunden - üblicherweise mit zwei Druckmittelleitungen, einer Hochdruckleitung und einer Niederdruckleitung. Hydrostatische Getriebe nach dem Oberbegriff des Anspruchs 1 sind bekannt z.B. aus den Druckschriften DE 10 2009 048 807 A1 bzw. DE 10 2010 045 541 A1 bzw. US 6 176 086 B1.

Insbesondere bei der Verwendung von Axialkolbenmaschinen und/oder Radialkolbenmaschinen hat dies den Nachteil, dass die Hydromaschinen aufwändig über Umsteuereinrichtungen, Magnetventile und/oder elektrische Steuereinrichtungen gesteuert werden müssen, um die einzelnen Arbeitsräume jeweils in Abhängigkeit von einem jeweils darin entstehenden beziehungsweise entstandenen Druck mit der dazu passenden Hochdruckleitung oder Niederdruckleitung fluidisch zu verbinden.

Dazu kommt bei der Verwendung von Axialkolbenmaschinen ein schlechter Wirkungsgrad durch eine auf der Antriebsseite erforderliche Umwandlung einer rotatorischen Bewegung einer Antriebswelle in eine translatorische Bewegung der Kolben und eine auf der Abtriebsseite erneut erforderliche Umwandlung der translatorischen Bewegung der Kolben in eine rotatorische Bewegung einer Abtriebswelle.

Herkömmliche Radialkolbenmaschinen haben zwar eine günstige Krafteinleitung in Arbeitsrichtung (es ist keine Umwandlung einer rotatorischen Bewegung der Antriebswelle oder Abtriebswelle in eine translatorische Bewegung der Kolben oder umgekehrt erforderlich), aber nach wie vor sind, wie oben erwähnt, Steuereinrichtungen für das fluidische Verbinden der jeweiligen Hochdruckseite und der jeweiligen Niederdruckseite erforderlich.

Dem gegenüber liegt der Erfindung die Aufgabe zu Grunde, ein hydrostatisches Getriebe zu schaffen, bei dem ein Aufwand zum Steuern der fluidisch verbundenen Hydromaschinen verringert ist.

Diese Aufgabe wird gelöst durch ein hydrostatisches Getriebe mit den Merkmalen des Patentanspruchs 1.

Vorteilhafte Weiterbildungen des erfindungsgemäßen hydrostatischen Getriebes sind in den weiteren Unteransprüchen beschrieben.

Ein hydrostatisches Getriebe gemäß der vorliegenden Erfindung enthält eine getriebeeingangsseitig angeordnete erste Radialkolbenmaschine und eine damit fluidisch verbundenen getriebeausgangsseitig angeordnete zweite Radialkolbenmaschine. Je nach getriebeseitiger Anordnung weisen die Radialkolbenmaschinen jeweils mindestens einen getriebeeingangsseitigen Arbeitsraum oder einen getriebeausgangsseitigen Arbeitsraum auf, der jeweils über einen Kolben und einen, insbesondere gehäusefesten, Zylinder begrenzt ist. Ein maximaler Kolbenhub entspricht einer halben Periode und damit 180°. Erfindungsgemäß ist mindestens einer der getriebeeingangsseitigen Arbeitsräume mit mindestens einem der getriebeausgangsseitigen Arbeitsräume während eines Betriebs dauerhaft fluidisch verbunden.

Ein Vorteil des erfindungsgemäßen hydrostatischen Getriebes ist, dass wegen der während des Betriebs jeweils dauerhaft fluidisch verbundenen Arbeitsräumen eine Steuerungseinrichtung überflüssig ist, die steuert, welcher Arbeitsraum mit einer bestimmten Druckmittelleitung verbunden werden soll.

Ein weiterer Vorteil des erfindungsgemäßen hydrostatischen Getriebes ist, dass eine mechanische Leistung in eine hydraulische Leistung und die hydraulische Leistung in eine elektrische Leistung umwandelbar ist, oder umgekehrt. Beispielsweise kann es in Windkraftanlagen zur Stromerzeugung eingesetzt werden oder als Schneckenantrieb eines Extruders.

Vorteilhafterweise pendelt eine Druckmittelsäule zwischen dem mindestens einen der getriebeeingangsseitigen Arbeitsräume und dem damit während des Betriebs dauerhaft fluidisch verbundenen mindestens einen der getriebeausgangsseitigen Arbeitsräume während des Betriebs hin und zurück. Da sich somit kein Druckmittelfluss im herkömmlichen Sinn ergibt, müssen lediglich Verlustmengen über eine Speisepumpe ausgeglichen werden.

Vorteilhafterweise sind in einer getriebeeingangsseitigen Arbeitsraumgruppe drei getriebeeingangsseitige Arbeitsräume enthalten, wobei der Kolbenhub zweier benachbart angeordneter getriebeeingangsseitiger Arbeitsräume um etwa 120° phasenversetzt ist.

Vorteilhafterweise sind in einer getriebeausgangsseitigen Arbeitsraumgruppe drei getriebeausgangsseitige Arbeitsräume enthalten, wobei der Kolbenhub zweier benachbart angeordneter getriebeausgangsseitiger Arbeitsräume um etwa 120° phasenversetzt ist.

Alternativ ist auch eine von drei abweichende Anzahl der getriebeeingangsseitigen oder Arbeitsräume je Arbeitsraumgruppe möglich. Vorteilhafterweise ergibt sich bei drei um etwa 120° phasenversetzten Kolbenhüben der Arbeitsräume je Arbeitsraumgruppe vorteilhafterweise ein harmonischer, insbesondere konstanter, Drehmomentverlauf analog einem sich bei einem Drehstrommotor mit um etwa 120° phasenversetzten Spannungen ergebenden harmonischen Drehfeld ohne Oberschwingungen. Auch das Hin- und Herpendeln der Druckmittelsäule kann analog einem mit Wechselstrom betriebenen Drehstrommotor gesehen werden.

### Allgemein gilt:

Arbeitsräume innerhalb einer Arbeitsraumgruppe decken eine ganze Periode = 360° ab.

Ein Phasenversatz zwischen den Kolbenhüben zweier benachbart angeordneter Arbeitsräume = 360° / (Anzahl der Arbeitsräume je Arbeitsraumgruppe), unabhängig von einem physikalischen Anordnungswinkel der Arbeitsräume.

Der physikalische Anordnungswinkel zwischen den zwei benachbart angeordneten Arbeitsräumen = 360° / (Anzahl der Arbeitsräume je Arbeitsraumgruppe * Anzahl der Arbeitsraumgruppen), hängt also ausschließlich von der Gesamtzahl der bevorzugt gleichmäßig über den Umfang verteilten Arbeitsräume ab.

So ist beispielsweise ein Phasenversatz zwischen den Kolbenhüben zweier benachbart angeordneter Arbeitsräume bei
3 Arbeitsräumen je Arbeitsraumgruppe = 360° / 3 = 120° und bei
4 Arbeitsräumen je Arbeitsraumgruppe = 360° / 4 = 90°, unabhängig davon, wie viele solcher Arbeitsraumgruppen in der Radialkolbenmaschine enthalten sind.

Weiter beispielsweise ist ein physikalischer Anordnungswinkel zwischen den zwei benachbart angeordneten Arbeitsräumen bei
2 Arbeitsraumgruppen mit je 3 Arbeitsräumen = 360°/(3 * 2) = 60° und bei
3 Arbeitsraumgruppen mit je 4 Arbeitsräumen = 360°/(4 * 3) = 30°.

Vorteilhafterweise ist genau einer der getriebeeingangsseitigen Arbeitsräume der getriebeeingangsseitigen Arbeitsraumgruppe mit genau einem der getriebeausgangsseitigen Arbeitsräume der getriebeausgangsseitigen Arbeitsraumgruppe während des Betriebs dauerhaft fluidisch verbunden ist, was einer 1:1-Übersetzung des erfindungsgemäßen hydrostatischen Getriebes entspricht.

Vorteilhaft sind in der einen der Radialkolbenmaschinen mehr Arbeitsraumgruppen enthalten sind als in der anderen der Radialkolbenmaschinen, was einer anderen Übersetzung als 1:1 des erfindungsgemäßen hydrostatischen Getriebes entspricht.

Ein weiterer Vorteil des erfindungsgemäßen hydrostatischen Getriebes ist eine Wirkung als Getriebestufe in beide Richtungen; bevorzugt sind Antriebsseite und Abtriebsseite, zumindest in der Wirkungsweise, austauschbar.

Vorteilhafterweise ist die erste Radialkolbenmaschine mit der zweiten Radialkolbenmaschine über drei Druckmittelleitungen fluidisch verbunden.

Die Anzahl der Druckmittelleitungen, mit der die Radialkolbenmaschinen fluidisch verbunden sind, ist insbesondere unabhängig von der Übersetzung des erfindungsgemäßen hydrostatischen Getriebes.

Vorteilhafterweise sind mehrere getriebeeingangsseitige Arbeitsräume, deren Kolbenhub phasengleich ist, miteinander fluidisch gekoppelt, und mit einem oder mehreren der getriebeausgangsseitigen Arbeitsräume, deren Kolbenhub phasengleich ist, während des Betriebs dauerhaft fluidisch verbunden.

Vorteilhafterweise sind mehrere getriebeausgangsseitige Arbeitsräume, deren Kolbenhub phasengleich ist, miteinander fluidisch gekoppelt, und mit einem oder mehreren der getriebeeingangsseitigen Arbeitsräume, deren Kolbenhub phasengleich ist, während des Betriebs dauerhaft fluidisch verbunden.

Insbesondere bei drei Arbeitsräumen je Arbeitsraumgruppe ist über ein Zusammenfassen von phasengleichen Arbeitsräumen innerhalb einer Radialkolbenmaschine eine maximale Reduzierung die Anzahl der Druckmittelleitungen, mit denen die Radialkolbenmaschinen fluidisch verbunden sind, auf bevorzugt drei Druckmittelleitungen erreichbar. Alternativ dazu können die einzelnen Arbeitsräume der unterschiedlichen Radialkolbenmaschinen mit jeweils einer Druckmittelleitung fluidisch verbunden sein.

Zur Aufnahme einer größeren Eingangsleistung sind mehrere getriebeeingangsseitige Radialkolbenmaschinen miteinander fluidisch koppelbar und/oder zur Abgabe einer größeren Ausgangsleistung sind mehrere getriebeausgangsseitige Radialkolbenmaschinen miteinander fluidisch koppelbar. Dabei gilt analog zu dem oben Beschriebenen, dass die innerhalb einer Getriebeseite fluidisch gekoppelten Arbeitsräume der Radialkolbenmaschinen phasengleiche Kolbenhübe aufweisen und in Bezug auf die mit ihnen fluidisch verbundenen Arbeitsräume der Radialkolbenmaschine der anderen Getriebeseite um 180° phasenversetzte Kolbenhübe aufweisen.

Vorteilhafterweise sind zur Drehrichtungsumkehr einer der Radialkolbenmaschinen in jeder der getriebeeingangsseitigen Arbeitsraumgruppen oder in jeder der getriebeausgangsseitigen Arbeitsraumgruppen zwei der drei während des Betriebs dauerhaft fluidisch verbundenen getriebeeingangsseitigen oder getriebeausgangsseitigen Arbeitsräume miteinander vertauscht verbindbar. Bevorzugt ist ein derartiges vertauschtes Verbinden der Arbeitsräume über Schaltventile realisierbar.

Vorteilhafterweise sind die Radialkolbenmaschinen mit einer inneren Kolbenabstützung ausgebildet, deren Hubkurve etwa sinusförmig ausgebildet ist.

Die Frequenz der etwa sinusförmigen Hubkurve ist insbesondere abhängig von der Gesamtzahl der bevorzugt gleichmäßig über den Umfang verteilten Arbeitsräume.

Mehrere Ausführungsbeispiele eines erfindungsgemäßen hydrostatischen Getriebes sind in den Zeichnungen dargestellt. Anhand der Figuren dieser Zeichnungen wird die Erfindung nun näher erläutert.

Es zeigen:
Figur 1 ein schematisches Schaltbild eines erfindungsgemäßen hydrostatischen Getriebes gemäß einem ersten Ausführungsbeispiel,
Figur 2 ein Diagramm überlagerter und um 120° phasenversetzter Kolbenbewegungen einer Arbeitsraumgruppe mit drei Arbeitsräumen,
Figur 3 ein schematisches Schaltbild eines erfindungsgemäßen hydrostatischen Getriebes gemäß Figur 1 mit auf einer Seite umgekehrter Drehrichtung der Radialkolbenmaschine, und
Figur 4 ein schematisches Schaltbild eines erfindungsgemäßen hydrostatischen Getriebes gemäß einem zweiten Ausführungsbeispiel.

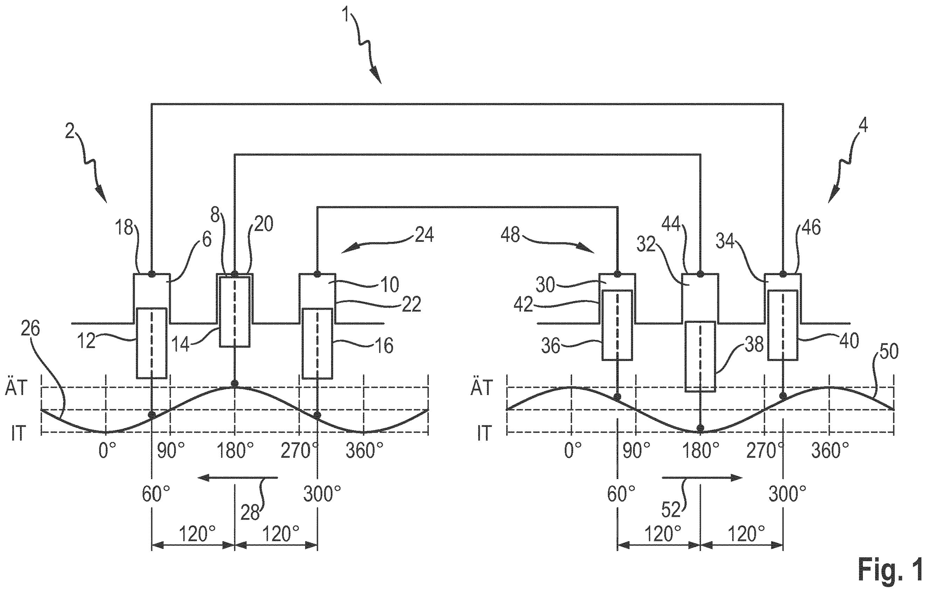

Die Figur 1 zeigt ein schematisches Schaltbild eines erstes Ausführungsbeispiels eines erfindungsgemäßen hydrostatischen Getriebes 1 in einer Momentaufnahme. Bei dem erfindungsgemäßen hydrostatischen Getriebe 1 ist eine getriebeeingangsseitig angeordnete erste Radialkolbenmaschine 2 mit einer getriebeausgangsseitig angeordneten zweiten Radialkolbenmaschine 4 fluidisch verbunden. Die erste Radialkolbenmaschine 2 enthält drei getriebeeingangsseitige Arbeitsräume 6, 8, 10, die jeweils über einen Kolben 12, 14, 16 und einen gehäusefesten Zylinder 18, 20, 22 begrenzt sind, wobei die Kolbenhübe der jeweils benachbart angeordneten Kolben 12, 14, 16 einen Phasenversatz von 120° zueinander aufweisen. Die getriebeeingangsseitigen Arbeitsräume 6, 8, 10 bilden eine getriebeeingangsseitige Arbeitsraumgruppe 24, die eine ganze Periode von 360° abdecken, wobei ein maximaler Kolbenhub von einem inneren Totpunkt IT zu einem äußeren Totpunkt ÄT einer halben Periode von 180° entspricht.

Die erste Radialkolbenmaschinen 2 hat eine innere Kolbenabstützung in Form einer getriebeeingangsseitigen Hubkurve 26, die der Einfachheit halber als Abwicklung dargestellt ist und etwa sinusförmig ausgebildet ist. Die Antriebsrichtung der Hubkurve 26 ist durch den Pfeil 28 dargestellt.

Die zweite Radialkolbenmaschine 4 enthält ebenso drei getriebeausgangsseitige Arbeitsräume 30, 32, 34, die jeweils über einen Kolben 36, 38, 40 und einen gehäusefesten Zylinder 42, 44, 46 begrenzt sind, wobei die Kolbenhübe der jeweils benachbart angeordneten Kolben 36, 38, 40 ebenfalls einen Phasenversatz von 120° zueinander aufweisen.

Die getriebeausgangsseitigen Arbeitsräume 30, 32, 34 bilden eine getriebeausgangsseitige Arbeitsraumgruppe 48, die eine ganze Periode von 360° abdecken, wobei ein maximaler Kolbenhub von einem inneren Totpunkt IT zu einem äußeren Totpunkt ÄT einer halben Periode von 180° entspricht.

Die zweite Radialkolbenmaschinen 4 hat ebenfalls eine innere Kolbenabstützung in Form einer getriebeausgangsseitigen Hubkurve 50, die der Einfachheit halber als Abwicklung dargestellt ist und etwa sinusförmig ausgebildet ist. Die Abtriebsrichtung der Hubkurve 50 ist durch den Pfeil 52 dargestellt.

Die Kolben 12, 14, 16, 36, 38, 40 werden jeweils von einer Vorspannkraft gegen die jeweilige Hubkurve 26, 50 gedrückt und sind jeweils in ihren zugeordneten Zylindern 18, 20, 22, 42, 44, 46 geführt.

Da beide Radialkolbenmaschinen 2, 4 dieselbe Anzahl an Arbeitsräumen 6, 8, 10, 30, 32, 34 enthalten, hat das erfindungsgemäße hydrostatische Getriebe 1 gemäß des ersten Ausführungsbeispiels eine Übersetzung von 1:1.

Während des Betriebs des erfindungsgemäßen hydrostatischen Getriebes 1 dauerhaft fluidisch verbunden sind jeweils diejenigen der Arbeitsräume 6, 8, 10, 30, 32, 34, deren Kolbenhübe einen Phasenversatz von 180° aufweisen; hier ist das der Arbeitsraum 6 (Kolben 12 steht 60° nach innerem Totpunkt IT) mit dem Arbeitsraum 34 (Kolben 40 steht 60° nach äußerem Totpunkt ÄT), der Arbeitsraum 8 (Kolben 14 steht bei äußerem Totpunkt ÄT) mit dem Arbeitsraum 32 (Kolben 38 steht bei innerem Totpunkt IT) und der Arbeitsraum 10 (Kolben 16 steht 60° vor innerem Totpunkt IT) mit dem Arbeitsraum 30 (Kolben 36 steht 60° vor äußerem Totpunkt ÄT).

Es versteht sich, dass die getriebeeingangsseitigen Arbeitsräume 6, 8, 10 in Bezug auf die getriebeausgangsseitigen Arbeitsräumen 30, 32, 34 mit denen sie fluidisch verbunden sind, einen um 180° phasenversetzten Kolbenhub aufweisen, da die einen die Druckmittelmenge des anderen aufnehmen müssen.

Die miteinander fluidisch verbundenen Arbeitsräume 6, 8, 10, 30, 32, 34 sind in ihrem Arbeitsraumvolumen, insbesondere in ihrem Hubraum, aneinander angepasst. In dem dargestellten Fall sind alle Arbeitsräume 6, 8, 10, 30, 32, 34 gleich groß.

Nachfolgend ist der Betrieb des erfindungsgemäßen hydrostatischen Getriebes 1 prinzipiell beschrieben, ausgehend von der in Figur 1 dargestellten Momentaufnahme:
Auf der Getriebeeingangsseite wird die Hubkurve 26 in Richtung des Pfeils 28 von einer mechanischen Antriebseinrichtung angetrieben, beispielsweise von einem Rotor einer Windkraftanlage zur Stromerzeugung.

Der Kolben 12, der zu Beginn der Betrachtung 60° nach dem inneren Totpunkt IT steht, wird von der ansteigenden getriebeeingangsseitigen Hubkurve 26 in Richtung äußerer Totpunkt ÄT gedrückt und verdrängt in dem dazugehörigen Arbeitsraum 6 vorhandenes Druckmittel in den fluidisch damit verbundenen Arbeitsraum 34. Dessen dazugehöriger Kolben 40 steht zu Beginn der Betrachtung 60°nach dem äußeren Totpunkt ÄT und wird durch das aus dem Arbeitsraum 6 verdrängte Druckmittel in Richtung innerer Totpunkt IT gedrückt und treibt somit die Hubkurve 50 in Richtung des Pfeils 52 an. Gleichzeitig dazu werden die beiden anderen getriebeeingangsseitigen Kolben 14, 16 mit jeweils einem Phasenversatz von 120° ebenfalls in ihrem jeweiligen Takt von der Hubkurve 26 angetrieben und bewegen sich wegen der Vorspannkraft, von der sie auf die Hubkurve 26 gedrückt werden, in Richtung innerer Totpunkt IT.

Der Kolben 14, der zu Beginn der Betrachtung beim äußeren Totpunkt ÄT steht, vergrößert dabei seinen dazugehörigen getriebeeingangsseitigen Arbeitsraum 8 und nimmt so das aus dem mit ihm fluidisch verbundenen getriebeausgangsseitigen Arbeitsraum 32 verdrängte Druckmittel auf, das aus diesem über die entsprechende Bewegung der getriebeausgangsseitigen Hubkurve 50 und den somit vom inneren Totpunkt IT in Richtung äußeren Totpunkt ÄT gedrückten Kolben 38 verdrängt wird.

Der Kolben 16, der zu Beginn der Betrachtung 60° vor dem inneren Totpunkt IT steht, wird von der angetriebenen getriebeeingangsseitigen Hubkurve 26 in Richtung innerer Totpunkt IT bewegt. Somit vergrößert er seinen zugeordneten getriebeeingangsseitigen Arbeitsraum 10, um das aus dem mit ihm fluidisch verbundenen getriebeausgangsseitigen Arbeitsraum 30 verdrängte Druckmittel aufzunehmen, das wegen der oben beschriebenen Bewegung der getriebeausgangsseitigen Hubkurve 50 in Richtung des Pfeils 52 und dem somit in Richtung äußerer Totpunkt ÄT bewegten Kolben 36 daraus verdrängt wird.

Sobald Kolben 12 den äußeren Totpunkt ÄT erreicht hat, steht der Kolben 40 auf dem inneren Totpunkt IT und beginnt im weiteren Verlauf des Betriebs, das in seinem zugeordneten Arbeitsraum 34 vorhandene Druckmittel wegen der anhaltenden Bewegung der getriebeausgangsseitigen Hubkurve 50 in Richtung des Pfeils 52 in den damit fluidisch verbundenen getriebeeingangsseitigen Arbeitsraum 6 zu verdrängen. Um jeweils 120° phasenversetzt gilt dies ebenfalls analog für die beiden anderen Kolben 36, 38 der zugeordneten Arbeitsräume 30, 32 der getriebeausgangsseitigen Arbeitsraumgruppe 48.

Eine Druckmittelsäule pendelt somit lediglich jeweils zwischen den während des Betriebs dauerhaft fluidisch verbundenen Arbeitsräumen 6, 8, 10, 30, 32, 34 hin und zurück, wobei sich kein Druckmittelfluss im herkömmlichen Sinn ergibt.

Wie oben beschrieben, werden dabei die Kolben 12, 14, 16 der getriebeeingangsseitigen Arbeitsräume 6, 8, 10 von der mechanisch angetriebenen getriebeeingangsseitigen Hubkurve 26 in Richtung äußerer Totpunkt ÄT bewegt und über das davon verdrängte Druckmittel werden die getriebeausgangsseitigen Kolben 36, 38, 40 in ihren zugeordneten getriebeausgangsseitigen Arbeitsräume 30, 32, 34 in Richtung innerer Totpunkt IT bewegt und treiben die getriebeausgangsseitigen Hubkurve 50 an, die an eine Abtriebseinrichtung gekoppelt ist.

Beim anschließenden von der wie erwähnt angetriebenen getriebeausgangsseitigen Hubkurve 50 bedingten Kolbenhub der getriebeausgangsseitigen Kolben 36, 38, 40 in ihren zugeordneten getriebeausgangsseitigen Arbeitsräumen 30, 32, 34 und dem dadurch bedingten Zurückpendeln der Druckmittelsäule zu dem jeweiligen der fluidisch damit verbundenen getriebeeingangsseitigen Arbeitsräume 6, 8, 10 wird keine Arbeit an der getriebeeingangsseitigen Hubkurve 26 verrichtet, ein Wechsel der Antriebsseite mit der Abtriebsseite findet nicht statt.

Bei der beispielsweise angegebenen Windkraftanlage ist die getriebeausgangsseitige Hubkurve 50 mit einer Abtriebseinrichtung verbunden, die die mechanische Energie der Hubkurve in eine elektrische Energie umwandelt, beispielsweise mit einem Generator.

Wird das erfindungsgemäße hydrostatische Getriebe 1 beispielsweise in einem Schneckenantrieb für einen Extruder eingesetzt, kann auf der Getriebeeingangsseite ein elektrischer Antrieb wie ein Elektromotor vorgesehen sein und auf der Getriebeausgangsseite ein mechanischer Abtrieb, der mit der getriebeausgangsseitigen Hubkurve 26 gekoppelt angetrieben wird.

Im Fall auf der einen Getriebeseite ein mechanische Antriebs- oder Abtriebseinrichtung vorgesehen ist und auf der anderen Getriebeseite ein Motorgenerator, kann das erfindungsgemäße hydrostatische Getriebe 1 in der einen wie in der anderen Richtung betrieben werden, um mechanische Energie in elektrische Energie umzuwandeln oder elektrische Energie in mechanische Energie umzuwandeln.

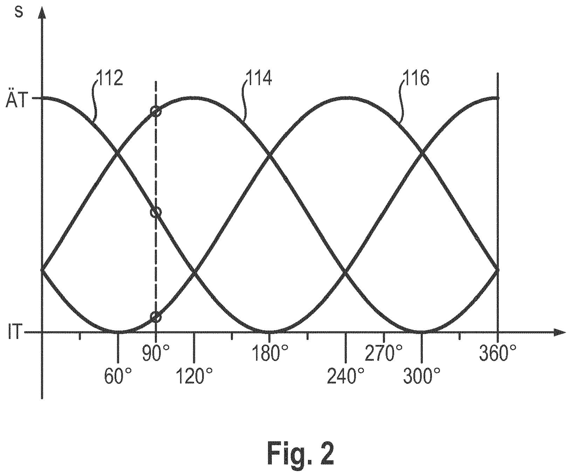

Aus dem in Figur 2 dargestellten Diagramm der um 120° phasenversetzten Kolbenhübe einer Arbeitsraumgruppe 24, 48 mit drei Arbeitsräumen 6, 8, 10, 30, 32, 34 über einen zurückgelegten Winkel ω, lässt sich ablesen, wo die einzelnen Kolben 12, 14, 16, 36, 38, 40 bei einem bestimmten Winkel stehen und in welche Richtung sie bewegt werden. Auf der Abszisse ist der zurückgelegte Winkel ω aufgetragen, wobei eine ganze Periode - also 360° - dargestellt ist. Auf der Ordinate ist der Kolbenhub angegeben, also der vom Kolben 12, 14, 16, 36, 38, 40 zurückgelegte Weg zwischen äußerem Totpunkt ÄT und innerem Totpunkt IT.

Wenn beispielsweise der Kolben 12, dessen Hubbewegung über den Winkel ω von der ersten Linie 112 dargestellt wird, an einer Stelle, bei der 90° der Periode zurückgelegt sind, auf der Hälfte der Strecke vom äußeren Totpunkt ÄT zum inneren Totpunkt IT steht, befindet sich sein benachbart angeordneter Kolben 14 kurz vor dem äußeren Totpunkt ÄT und zwar 30° davor. An derselben Stelle, also bei 90° der Periode, befindet sich der Kolben 16, der benachbart dem Kolben 14 angeordnet und dessen Kolbenbewegung in Bezug auf diesen um 120° phasenversetzt ist, auf dem Weg in Richtung äußerer Totpunkt ÄT und zwar 30° nach dem inneren Totpunkt IT.

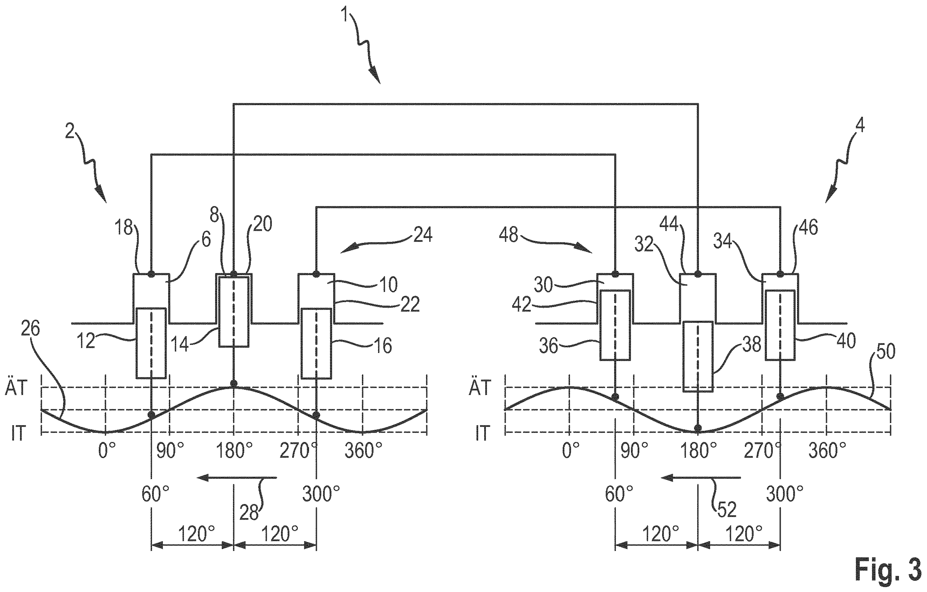

Das in Figur 3 dargestellte schematische Schaltbild eines erfindungsgemäßen hydrostatischen Getriebes 1 weist als Unterschied zu dem in Figur 1 dargestellten Ausführungsbeispiel eine umgekehrte Drehrichtung der zweiten Radialkolbenmaschine 4 auf.

Erreicht wurde die Drehrichtungsumkehr durch ein Vertauschen von zwei Fluidverbindungen der Arbeitsräume in der getriebeausgangsseitigen Arbeitsraumgruppe 30, 32, 34, derart, dass nun der Arbeitsraum 6 (Kolben 12 steht 60° nach innerem Totpunkt IT) mit dem Arbeitsraum 30 (Kolben 36 steht 60° vor äußerem Totpunkt ÄT) fluidisch verbunden ist und der Arbeitsraum 10 (Kolben 16 steht 60° vor innerem Totpunkt IT) mit dem Arbeitsraum 34 (Kolben 40 steht 60° nach äußerem Totpunkt ÄT).

Nach wie vor ist der Arbeitsraum 8 (Kolben 14 steht bei äußerem Totpunkt ÄT) mit dem Arbeitsraum 32 (Kolben 38 steht bei innerem Totpunkt IT) fluidisch verbunden.

Nachfolgend ist der Betrieb des erfindungsgemäßen hydrostatischen Getriebes 1 prinzipiell beschrieben, ausgehend von der in Figur 3 dargestellten Momentaufnahme:
Der Kolben 12, der zu Beginn der Betrachtung 60° nach dem inneren Totpunkt IT steht, wird von der ansteigenden getriebeeingangsseitigen Hubkurve 26 in Richtung äußerer Totpunkt ÄT gedrückt und verdrängt in dem dazugehörigen Arbeitsraum 6 vorhandenes Druckmittel in den fluidisch damit verbundenen Arbeitsraum 30. Dessen dazugehöriger Kolben 36 steht zu Beginn der Betrachtung 60°nach dem äußeren Totpunkt ÄT und wird durch das aus dem Arbeitsraum 6 verdrängte Druckmittel in Richtung innerer Totpunkt IT gedrückt und treibt somit die Hubkurve 50 in Richtung des Pfeils 52 an. Hierbei ist zu beachten, dass dies die entgegengesetzte Richtung ist, wie in Figur 1.

Der Kolben 16, der zu Beginn der Betrachtung 60° vor dem inneren Totpunkt IT steht, wird von der angetriebenen getriebeeingangsseitigen Hubkurve 26 in Richtung innerer Totpunkt IT bewegt. Somit vergrößert er seinen zugeordneten getriebeeingangsseitigen Arbeitsraum 10, um das aus dem mit ihm fluidisch verbundenen getriebeausgangsseitigen Arbeitsraum 34 verdrängte Druckmittel aufzunehmen, das wegen der oben beschriebenen Bewegung der getriebeausgangsseitigen Hubkurve 50 in Richtung des Pfeils 52 und dem somit in Richtung äußerer Totpunkt ÄT bewegten Kolben 40 daraus verdrängt wird.

Für den anderen beiden verbliebenen Kolben 14, 38 deren zugeordnete Arbeitsräume 8, 32 wie in Figur 1 dargestellt fluidisch miteinander verbunden sind, gilt das zu Figur 1 beschriebene Verhalten.

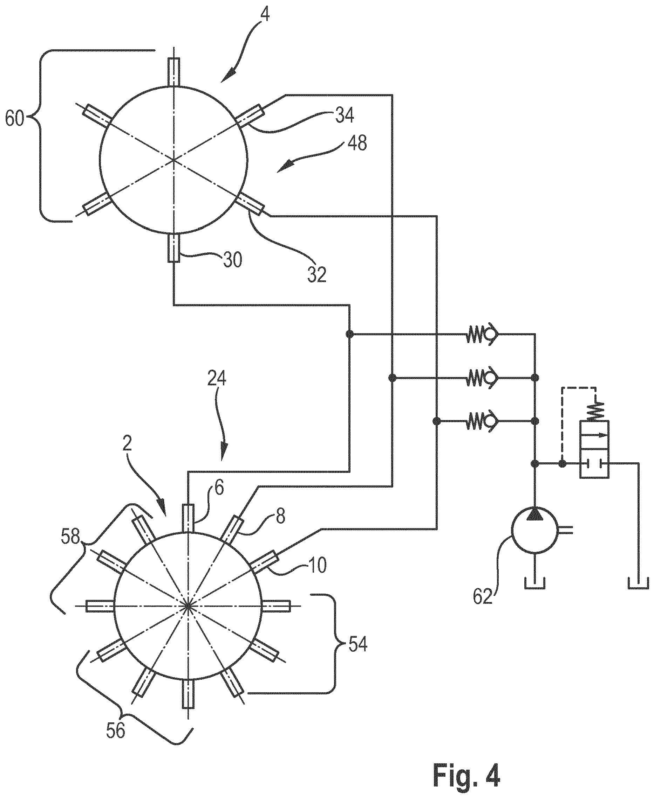

Figur 4 zeigt ein schematisches Schaltbild eines erfindungsgemäßen hydrostatischen Getriebes 1 gemäß einem zweiten Ausführungsbeispiel.

Der grundsätzliche Aufbau ist wie in Figur 1, Figur 2 und Figur 3 beschrieben, ohne die Drehrichtungen der Radialkolbenmaschinen 2, 4 zu berücksichtigen.

Im Unterschied zu den obigen Figuren enthalten die beiden Radialkolbenmaschinen 2, 4 mehrere Arbeitsraumgruppen 24, 48, 54, 56, 58, 60, wobei die erste Radialkolbenmaschine 2 vier getriebeeingangsseitige Arbeitsraumgruppen 24, 54, 56, 58 hat und die zweite Radialkolbenmaschine 4 zwei getriebeausgangsseitige Arbeitsraumgruppen 48, 60 hat. Das erfindungsgemäße hydrostatische Getriebe 1 nach dem zweiten Ausführungsbeispiel hat demnach ein Übersetzungsverhältnis von 2:1.

Zusätzlich ist hier noch eine Speisepumpe 62 mit zugehörigen Hydraulikelementen zum Ausgleich der internen Leckagemengen der Radialkolbenmaschinen 2, 4 dargestellt.

Wie in Figur 1 und Figur 3 ist eine fluidische Verbindung zwischen den Arbeitsräumen 6, 8, 10, 30, 32, 34 je einer einzelnen Arbeitsraumgruppe 24, 48 dargestellt, wobei die anderen Fluidverbindungen zwischen den anderen Arbeitsräumen aus Gründen der Übersichtlichkeit weggelassen wurden.

Für die anderen Fluidverbindungen sind beispielsweise mehrere getriebeeingangsseitige Arbeitsräume, deren Kolbenhub phasengleich ist, miteinander fluidisch gekoppelt und mit einem oder mehreren der getriebeausgangsseitigen Arbeitsräume, deren Kolbenhub untereinander phasengleich ist, aber zu den getriebeeingansseitigen Arbeitsräumen um 180° phasenversetzt ist, während des Betriebs dauerhaft fluidisch verbunden.

Insbesondere bei drei Arbeitsräumen je Arbeitsraumgruppe 24, 48 54, 56, 58, 60 ist über ein Zusammenfassen von phasengleichen Arbeitsräumen innerhalb einer Radialkolbenmaschine 2, 4 eine maximale Reduzierung die Anzahl der Druckmittelleitungen, mit denen die Radialkolbenmaschinen fluidisch verbunden sind, auf drei Druckmittelleitungen erreichbar. Alternativ dazu können die einzelnen Arbeitsräume der unterschiedlichen Radialkolbenmaschinen 2, 4 mit jeweils einer Druckmittelleitung fluidisch verbunden sein.

Analog zu dem oben Beschriebenen sind die miteinander fluidisch verbundenen Arbeitsräume in ihrem Arbeitsraumvolumen, insbesondere in ihrem Hubraum, aneinander angepasst, da beispielsweise die getriebeeingangsseitigen Arbeitsräume das Gesamtvolumen der gekoppelten getriebeausgangsseitigen Arbeitsräume aufnehmen müssen und umgekehrt.

Offenbart ist ein hydrostatisches Getriebe mit einer ersten Radialkolbenmaschine und einer damit fluidisch verbundenen zweiten Radialkolbenmaschine, wobei die Radialkolbenmaschinen je nach getriebeseitiger Anordnung jeweils mindestens einen getriebeeingangsseitigen Arbeitsraum oder einen getriebeausgangsseitigen Arbeitsraum aufweisen, der jeweils über einen Kolben und einen Zylinder begrenzt ist. Erfindungsgemäß ist mindestens einer der getriebeeingangsseitigen Arbeitsräume mit mindestens einem der getriebeausgangsseitigen Arbeitsräume während eines Betriebs dauerhaft fluidisch verbunden.

Auch wenn vorhergehend und in den Patentansprüchen immer von Radialkolbenmaschinen die Rede ist, so sei hier ausdrücklich darauf hingewiesen, dass eine oder auch beide Maschinen auch als Axialkolbenmaschinen ausgeführt sein können. Ebenso können eine oder beide Maschinen als hydraulische Linearmotoren ausgeführt sein. Insbesondere anhand der Figur 1 ist leicht ersichtlich, dass die erfinderische Idee auch mit Linearmotoren verwirklicht sein kann.

### Bezugszeichenliste

- 1: Hydrostatischen Getriebe
- 2: erste Radialkolbenmaschine
- 4: zweite Radialkolbenmaschine
- 6: getriebeeingangsseitiger Arbeitsraum
- 8: getriebeeingangsseitiger Arbeitsraum
- 10: getriebeeingangsseitiger Arbeitsraum
- 12: Kolben
- 14: Kolben
- 16: Kolben
- 18: Zylinder
- 20: Zylinder
- 22: Zylinder
- 24: getriebeeingangsseitige Arbeitsraumgruppe
- 26: getriebeeingangsseitigen Hubkurve
- 28: Pfeil
- 30: getriebeausgangsseitiger Arbeitsraum
- 32: getriebeausgangsseitiger Arbeitsraum
- 34: getriebeausgangsseitiger Arbeitsraum
- 36: Kolben
- 38: Kolben
- 40: Kolben
- 42: Zylinder
- 44: Zylinder
- 46: Zylinder
- 48: getriebeausgangsseitige Arbeitsraumgruppe
- 50: getriebeausgangsseitige Hubkurve
- 52: Pfeil
- 54: getriebeeingangsseitige Arbeitsraumgruppe
- 56: getriebeeingangsseitige Arbeitsraumgruppe
- 58: getriebeeingangsseitige Arbeitsraumgruppe
- 60: getriebeausgangsseitige Arbeitsraumgruppe
- 62: Speisepumpe

## Patentansprüche

1. Hydrostatisches Getriebe mit einer getriebeeingangsseitig angeordneten ersten Radialkolbenmaschine (2) und einer damit fluidisch verbundenen getriebeausgangsseitig angeordneten zweiten Radialkolbenmaschine (4), wobei die Radialkolbenmaschinen (2, 4) je nach getriebeseitiger Anordnung jeweils mindestens einen getriebeeingangsseitigen Arbeitsraum (6, 8, 10) oder einen getriebeausgangsseitigen Arbeitsraum (30, 32, 34) aufweisen, der jeweils über einen Kolben (12, 14, 16) und einen Zylinder (18, 20, 22) begrenzt ist, und
wobei ein maximaler Kolbenhub einer halben Periode und damit 180° entspricht,
**dadurch gekennzeichnet, dass** mindestens einer der getriebeeingangsseitigen Arbeitsräume (6, 8, 10) mit mindestens einem der getriebeausgangsseitigen Arbeitsräume (30, 32, 34) während eines Betriebs dauerhaft fluidisch verbunden ist.

2. Hydrostatisches Getriebe nach Anspruch 1, wobei zwischen dem mindestens einen der getriebeeingangsseitigen Arbeitsräume (6, 8, 10) und dem damit während des Betriebs dauerhaft fluidisch verbundenen mindestens einen der getriebeausgangsseitigen Arbeitsräume (30, 32, 34) eine Druckmittelsäule während des Betriebs hin und zurück pendelt.

3. Hydrostatisches Getriebe nach Anspruch 1 oder 2, wobei in einer getriebeeingangsseitigen Arbeitsraumgruppe (24) drei getriebeeingangsseitige Arbeitsräume (6, 8, 10) enthalten sind, und wobei der Kolbenhub zweier benachbart angeordneter getriebeeingangsseitiger Arbeitsräume (6, 8, 10) um etwa 120° phasenversetzt ist.

4. Hydrostatisches Getriebe nach einem der Ansprüche 1 bis 3, wobei in einer getriebeausgangsseitigen Arbeitsraumgruppe (48) drei getriebeausgangsseitige Arbeitsräume (30, 32, 34) enthalten sind, und wobei der Kolbenhub zweier benachbart angeordneter getriebeausgangsseitiger Arbeitsräume (30, 32, 34) um etwa 120° phasenversetzt ist.

5. Hydrostatisches Getriebe nach Anspruch 3 oder 4, wobei genau einer der getriebeeingangsseitigen Arbeitsräume (6, 8, 10) der getriebeeingangsseitigen Arbeitsraumgruppe (24) mit genau einem der getriebeausgangsseitigen Arbeitsräume (30, 32, 34) der getriebeausgangsseitigen Arbeitsraumgruppe (48) während des Betriebs dauerhaft fluidisch verbunden ist.

6. Hydrostatisches Getriebe nach einem der Ansprüche 3 bis 5, wobei in der einen der Radialkolbenmaschinen (2, 4) mehr Arbeitsraumgruppen enthalten sind als in der anderen der Radialkolbenmaschinen (2, 4).

7. Hydrostatisches Getriebe nach einem der Ansprüche 3 bis 6, wobei die erste Radialkolbenmaschine (2) mit der zweiten Radialkolbenmaschine (4) über drei Druckmittelleitungen fluidisch verbunden ist.

8. Hydrostatisches Getriebe nach einem der vorhergehenden Ansprüche, wobei mehrere getriebeeingangsseitige Arbeitsräume (6, 8, 10), deren Kolbenhub phasengleich ist, miteinander fluidisch gekoppelt sind, und mit einem oder mehreren der getriebeausgangsseitigen Arbeitsräume (30, 32, 34), deren Kolbenhub phasengleich ist, während des Betriebs dauerhaft fluidisch verbunden sind.

9. Hydrostatisches Getriebe nach einem der vorhergehenden Ansprüche, wobei mehrere getriebeausgangsseitige Arbeitsräume (30, 32, 34), deren Kolbenhub phasengleich ist, miteinander fluidisch gekoppelt sind, und mit einem oder mehreren der getriebeeingangsseitigen Arbeitsräume (6, 8, 10), deren Kolbenhub phasengleich ist, während des Betriebs dauerhaft fluidisch verbunden sind.

10. Hydrostatisches Getriebe nach einem der vorhergehenden Ansprüche 3 bis 9, wobei zur Drehrichtungsumkehr einer der Radialkolbenmaschinen (2, 4) in jeder der getriebeeingangsseitigen Arbeitsraumgruppen (24, 54, 56, 58) oder in jeder der getriebeausgangsseitigen Arbeitsraumgruppen (48, 60) zwei der drei während des Betriebs dauerhaft fluidisch verbundenen getriebeeingangsseitigen oder getriebeausgangsseitigen Arbeitsräume (6, 8, 10, 30, 32, 34) miteinander vertauscht verbindbar sind.

11. Hydrostatisches Getriebe nach einem der vorhergehenden Ansprüche, wobei die Radialkolbenmaschinen (2, 4) mit einer inneren Kolbenabstützung ausgebildet sind, deren Hubkurve (26, 50) etwa sinusförmig ausgebildet ist.

## Claims

1. Hydrostatic transmission having a first radial piston machine (2) which is arranged on the transmission input side and a second radial piston machine (4) which is connected fluidically to the former and is arranged on the transmission output side, the radial piston machines (2, 4) having, depending on the transmission-side arrangement, in each case at least one transmission input-side working space (6, 8, 10) or one transmission output-side working space (30, 32, 34) which is delimited in each case via a piston (12, 14, 16) and a cylinder (18, 20, 22), and a maximum piston stroke corresponding to a half period and therefore to 180°, **characterized in that** at least one of the transmission input-side working spaces (6, 8, 10) is permanently connected fluidically to at least one of the transmission output-side working spaces (30, 32, 34) during an operation.

2. Hydrostatic transmission according to Claim 1, a pressure medium column shuttling to and fro during the operation between the at least one of the transmission input-side working spaces (6, 8, 10) and the at least one of the transmission output-side working spaces (30, 32, 34) which is permanently connected fluidically to the former during the operation.

3. Hydrostatic transmission according to Claim 1 or 2, three transmission input-side working spaces (6, 8, 10) being contained in a transmission input-side working space group (24), and the piston stroke of two transmission input-side working spaces (6, 8, 10) which are arranged adjacently being phase-offset by approximately 120°.

4. Hydrostatic transmission according to one of Claims 1 to 3, three transmission output-side working spaces (30, 32, 34) being contained in a transmission output-side working space group (48), and the piston stroke of two transmission output-side working spaces (30, 32, 34) which are arranged adjacently being phase-offset by approximately 120°.

5. Hydrostatic transmission according to Claim 3 or 4, precisely one of the transmission input-side working spaces (6, 8, 10) of the transmission input-side working space group (24) being permanently connected fluidically during the operation to precisely one of the transmission output-side working spaces (30, 32, 34) of the transmission output-side working space group (48).

6. Hydrostatic transmission according to one of Claims 3 to 5, more working space groups being contained in one of the radial piston machines (2, 4) than in the other of the radial piston machines (2, 4).

7. Hydrostatic transmission according to one of Claims 3 to 6, the first radial piston machine (2) being connected fluidically to the second radial piston machine (4) via three pressure medium lines.

8. Hydrostatic transmission according to one of the preceding claims, a plurality of transmission-input side working spaces (6, 8, 10), the piston stroke of which is in phase, being coupled fluidically to one another and being permanently connected fluidically during the operation to one or more of the transmission output-side working spaces (30, 32, 34), the piston stroke of which is in phase.

9. Hydrostatic transmission according to one of the preceding claims, a plurality of transmission output-side working spaces (30, 32, 34), the piston stroke of which is in phase, being coupled fluidically to one another and being permanently connected fluidically during the operation to one or more of the transmission input-side working spaces (6, 8, 10), the piston stroke of which is in phase.

10. Hydrostatic transmission according to one of the preceding Claims 3 to 9, it being possible, for the rotational direction reversal of one of the radial piston machines (2, 4), for two of the three transmission input-side or transmission output-side working spaces (6, 8, 10, 30, 32, 34) to be connected to one another in a reversed manner in each of the transmission input-side working space groups (24, 54, 56, 58) or in each of the transmission output-side working space groups (48, 60).

11. Hydrostatic transmission according to one of the preceding claims, the radial piston machines (2, 4) being configured with an inner piston support, the lifting cam (26, 50) of which is approximately in sinusoidal configuration.

## Revendications

1. Transmission hydrostatique avec une première machine à pistons radiaux (2) disposée côté entrée de la transmission et une deuxième machine à pistons radiaux (4) fluidiquement raccordée à celle-ci et disposée côté sortie de la transmission, dans laquelle les machines à pistons radiaux (2, 4) présentent, selon leur disposition par rapport au côté de la transmission, respectivement au moins une chambre de travail côté entrée de la transmission (6, 8, 10) ou une chambre de travail côté sortie de la transmission (30, 32, 34), qui est limitée respectivement par un piston (12, 14, 16) et un cylindre (18, 20, 22), et dans laquelle une levée de piston correspond à une demi-période et dès lors à 180°, **caractérisée en ce qu'**au moins une des chambres de travail côté entrée de la transmission (6, 8, 10) est raccordée fluidiquement de façon permanente pendant un fonctionnement à au moins une des chambres de travail côté sortie de la transmission (30, 32, 34).

2. Transmission hydraulique selon la revendication 1, dans laquelle une colonne de fluide sous pression oscille en alternance pendant le fonctionnement entre au moins une des chambres de travail côté entrée de la transmission (6, 8, 10) et ladite au moins une chambre de travail côté sortie de la transmission (30, 32, 34) raccordée fluidiquement à celle-ci de façon permanente pendant le fonctionnement.

3. Transmission hydraulique selon la revendication 1 ou 2, dans laquelle trois chambres de travail côté entrée de la transmission (6, 8, 10) sont contenues dans un groupe de chambres de travail côté entrée de la transmission (24) et dans laquelle la levée de piston de deux chambres de travail côté entrée de la transmission (6, 8, 10) disposées en position voisine présente un décalage de phase d'environ 120°.

4. Transmission hydraulique selon l'une quelconque des revendications 1 à 3, dans laquelle trois chambres de travail côté sortie de la transmission (30, 32, 34) sont contenues dans un groupe de chambres de travail côté sortie de la transmission (48), et dans laquelle la levée de piston de deux chambres de travail côté sortie de la transmission (30, 32, 34) disposées en position voisine présente un décalage de phase d'environ 120°.

5. Transmission hydraulique selon la revendication 3 ou 4, dans laquelle exactement une des chambres de travail côté entrée de la transmission (6, 8, 10) du groupe de chambres de travail côté entrée de la transmission (24) est raccordée fluidiquement de façon permanente pendant le fonctionnement à exactement une des chambres de travail côté sortie de la transmission (30, 32, 34) du groupe de chambres de travail côté sortie de la transmission (48).

6. Transmission hydraulique selon l'une quelconque des revendications 3 à 5, dans laquelle un plus grand nombre de groupes de chambre de travail sont contenues dans une des machines à pistons radiaux (2, 4) que dans l'autre des machines à pistons radiaux (2, 4).

7. Transmission hydraulique selon l'une quelconque des revendications 3 à 6, dans laquelle la première machine à pistons radiaux (2) est raccordée à la deuxième machine à pistons radiaux (4) par trois conduites de fluide sous pression.

8. Transmission hydraulique selon l'une quelconque des revendications précédentes, dans laquelle plusieurs chambres de travail côté entrée de la transmission (6, 8, 10), dont la levée des pistons est en phase, sont fluidiquement couplées l'une à l'autre, et sont raccordées fluidiquement de façon permanente pendant le fonctionnement à une ou plusieurs des chambres de travail côté sortie de la transmission (30, 32, 34), dont la levée des pistons est en phase.

9. Transmission hydraulique selon l'une quelconque des revendications précédentes, dans laquelle plusieurs chambres de travail côté sortie de la transmission (30, 32, 34), dont la levée des pistons est en phase, sont fluidiquement couplées l'une à l'autre, et sont raccordées fluidiquement de façon permanente pendant le fonctionnement à une ou plusieurs chambres de travail côté entrée de la transmission (6, 8, 10), dont la levée des pistons est en phase.

10. Transmission hydraulique selon l'une quelconque des revendications précédentes 3 à 9, dans laquelle pour l'inversion du sens de rotation d'une des machines à pistons radiaux (2, 4) dans chacun des groupes de chambres de travail côté entrée de la transmission (24, 54, 56, 58) ou dans chacun des groupes de chambres de travail côté sortie de la transmission (48, 60), deux des trois chambres de travail côté entrée de la transmission ou côté sortie de la transmission (6, 8, 10, 30, 32, 34) raccordées fluidiquement de façon permanente pendant le fonctionnement peuvent être raccordées l'une à l'autre de façon permutée.

11. Transmission hydraulique selon l'une quelconque des revendications précédentes, dans laquelle les machines à pistons radiaux (2, 4) sont réalisées avec un appui de piston intérieur, dont la courbe de levée (26, 50) est environ de forme sinusoïdale.
